# EUROPEAN PATENT APPLICATION

(11) **EP 4 422 281 A1**
(43) Date of publication of application: **28.08.2024**
(21) Application number: 22882497.5
(22) Date of filing: 09.09.2022
(51) Int. Cl.: H04W 40/22, H04W 40/12, H04W 88/04

(54) **TRANSMISSION PATH CONFIGURATION METHOD AND APPARATUS, COMMUNICATION DEVICE AND TERMINAL**

(30) Priority: 19.10.2021 CN 202111217794
(71) Applicant: Datang Mobile Communications Equipment Co., Ltd., Beijing 100085 (CN)
(72) Inventor: ZHAO, Yali, Beijing 100085 (CN)
(74) Representative: Maiwald GmbH
(86) International application number: PCT/CN2022/118136
(87) International publication number: WO 2023/065883

(57) **Abstract**

The present disclosure provides a transmission path configuration method and apparatus, a communication device and a UE. The method includes: transmitting, by a communication device, transmission path configuration information for a first user equipment (UE), to the first UE and/or a relay UE; where the communication device is a network device accessed by the first UE or a target UE that communicates with the first UE; and the relay UE is a relay UE used by the first UE for accessing the communication device.

## Description

### CROSS-REFERENCE TO RELATED APPLICATION

The present disclosure claims the priority of Chinese Application No. 202111217794.3 filed on October 19, 2021, the disclosure of which are incorporated in their entireties by reference herein.

### TECHNICAL FIELD

The present disclosure relates to the field of communication technologies, and in particular to a transmission path configuration method and apparatus, a communication device and a UE.

### BACKGROUND

In order to expand network coverage, one solution is to introduce relays. The relay may be a UE with a relay function, and includes: UE-to-Network Relay (U2N Relay) and UE-to-UE Relay (U2U Relay).

After introduction of U2N Relay and U2U Relay, in order to improve a peak rate and transmission reliability of a remote UE, it is possible to consider using direct path (direct path) and indirect path for simultaneous data transmission or using multiple indirect paths for simultaneous data transmission, i.e., multi-path transmission. In the related art, there is no related solution on how to configure transmission paths in the relay scenario.

### SUMMARY

An object of the present disclosure is to provide a transmission path configuration method and apparatus, a communication device and UE, so as to provide a multi-path transmission configuration solution in a relay scenario.

One embodiment of the present disclosure provides a transmission path configuration method, including:
transmitting, by a communication device, transmission path configuration information for a first user equipment (UE), to the first UE and/or a relay UE;
wherein the communication device is a network device accessed by the first UE or a target UE that communicates with the first UE; and the relay UE is a relay UE used by the first UE for accessing the communication device.

Optionally, the method further includes:
determining, by the communication device, the transmission path configuration information for the first UE, according to implementation of the communication device;
   and/or,
determining, by the communication device, the transmission path configuration information for the first UE, according to auxiliary information received from the first UE.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the cell is a cell discovered by the first UE when the first UE performs cell search;
and/or,
the cell is a cell detected by the first UE through cell measurement.

Optionally, the relay UE is a relay UE discovered by the first UE when the first UE performs relay discovery.

Optionally, the cell satisfies a first condition; and the first condition includes: channel quality of a Uu interface of the cell is greater than a first threshold.

Optionally, the relay UE satisfies a second condition; and the second condition includes: an access stratum criterion and a non-access stratum criterion;
the access stratum criterion includes: channel quality of a Uu interface and/or PC5 interface of the relay UE is greater than a second threshold value; the non-access stratum criterion includes: a policy of whether the relay UE is allowed to serve as a relay.

Optionally, the method further includes:
transmitting first indication information to the first UE; wherein the first indication information is used to instruct the first UE to perform a first operation;
wherein the first operation includes at least one of cell search, cell measurement and relay UE discovery.

Optionally, transmission signaling of the auxiliary information includes one of the following:
RRC signaling between the first UE and the communication device;
MAC CE over the Uu interface;
Physical layer signaling over the Uu interface;
MAC CE over sidelink interface;
Physical layer signaling over the sidelink interface.

Optionally, the transmitting, by the communication device, transmission path configuration information for the first UE to the first UE and/or the relay UE, includes at least one of the following:
transmitting first transmission path configuration information to the first UE, wherein the first transmission path configuration information is used to indicate identification information of a relay UE that the first UE needs to access;
transmitting second transmission path configuration information to the relay UE, wherein the second transmission path configuration information is used to indicate identification information of a first UE that needs to establish a sidelink interface connection with the relay UE.

Optionally, the method further includes: configuring a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

Optionally, the method further includes:
receiving UE capability information transmitted by the first UE, wherein the UE capability information is used to indicate that the first UE supports transmission using multiple transmission paths.

One embodiment of the present disclosure provides a transmission path configuration method, including:
receiving, by a first UE, transmission path configuration information for the first UE transmitted by a communication device;
wherein the communication device is a network device accessed by the first UE or a target UE that communicates with the first UE.

Optionally, the transmission path configuration information is determined by the communication device according to implementation of the communication device and/or auxiliary information transmitted by the first UE.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the cell is a cell discovered by the first UE when the first UE performs cell search;
and/or,
the cell is a cell detected by the first UE through cell measurement.

Optionally, the relay UE is a relay UE discovered by the first UE when the first UE performs relay discovery.

Optionally, the cell satisfies a first condition; and the first condition includes: channel quality of a Uu interface of the cell is greater than a first threshold.

Optionally, the relay UE satisfies a second condition; and the second condition includes: an access stratum criterion and a non-access stratum criterion;
the access stratum criterion includes: channel quality of a Uu interface and/or PC5 interface of the relay UE is greater than a second threshold value; the non-access stratum criterion includes: a policy of whether the relay UE is allowed to serve as a relay.

Optionally, the method further includes:
receiving first indication information transmitted by the communication device; performing a first operation according to the first indication information;
   or,
performing the first operation based on UE implementation of the first UE;
wherein the first operation includes at least one of cell search, cell measurement, and relay UE discovery.

Optionally, the method further includes:
transmitting the auxiliary information to the communication device.

Optionally, transmission signaling of the auxiliary information includes one of the following:
RRC signaling between the first UE and the communication device;
MAC CE over the Uu interface;
Physical layer signaling over the Uu interface;
MAC CE over sidelink interface;
Physical layer signaling over the sidelink interface.

Optionally, the receiving, by a first UE, transmission path configuration information for the first UE transmitted by a communication device, includes:
receiving first transmission path configuration information transmitted by the communication device, wherein the first transmission path configuration information is used to indicate identification information of a relay UE that the first UE needs to access.

Optionally, the transmission path configuration information includes a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

Optionally, the method further includes:
transmitting UE capability information to the communication device, wherein the UE capability information is used to indicate that the first UE supports transmission using multiple transmission paths.

One embodiment of the present disclosure provides a transmission path configuration method, including:
receiving, by a relay UE, transmission path configuration information for a first UE transmitted by a communication device;
wherein the communication device is a network device accessed by the first UE or a target UE that communicates with the first UE; and the relay UE is a relay UE used by the first UE for accessing the communication device.

Optionally, the transmission path configuration information is determined by the communication device according to implementation of the communication device and/or auxiliary information transmitted by the first UE.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the cell is a cell discovered by the first UE when the first UE performs cell search;
and/or,
the cell is a cell detected by the first UE through cell measurement.

Optionally, the relay UE is a relay UE discovered by the first UE when the first UE performs relay discovery.

Optionally, the cell satisfies a first condition; and the first condition includes: channel quality of a Uu interface of the cell is greater than a first threshold.

Optionally, the relay UE satisfies a second condition; and the second condition includes: an access stratum criterion and a non-access stratum criterion;
the access stratum criterion includes: channel quality of a Uu interface and/or PC5 interface of the relay UE is greater than a second threshold value; the non-access stratum criterion includes: a policy of whether the relay UE is allowed to serve as a relay.

Optionally, the receiving the transmission path configuration information for the first UE transmitted by the communication device, includes:
receiving second transmission path configuration information transmitted by the communication device, wherein the second transmission path configuration information is used to indicate identification information of a first UE that needs to establish a sidelink interface connection with the relay UE.

Optionally, the transmission path configuration information includes a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

One embodiment of the present disclosure provides a communication device, including: a memory, a transceiver, and a processor;
wherein the memory is used to store a computer program; the processor is used to read the computer program in the memory; the transceiver is used to transmit and receive data under control of the processor and perform the following:
transmitting transmission path configuration information for a first user equipment (UE), to the first UE and/or a relay UE;
wherein the communication device is a network device accessed by the first UE or a target UE that communicates with the first UE; and the relay UE is a relay UE used by the first UE for accessing the communication device.

Optionally, the processor is configured to read the computer program in the memory and perform the following:
determining the transmission path configuration information for the first UE, according to implementation of the communication device;
   and/or,
determining the transmission path configuration information for the first UE, according to auxiliary information received from the first UE.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the transceiver is configured to perform at least one of the following:
transmitting first transmission path configuration information to the first UE, wherein the first transmission path configuration information is used to indicate identification information of a relay UE that the first UE needs to access;
transmitting second transmission path configuration information to the relay UE, wherein the second transmission path configuration information is used to indicate identification information of a first UE that needs to establish a sidelink interface connection with the relay UE.

Optionally, the processor is configured to read the computer program in the memory and perform the following:
configuring a transmission path identifier for all or part of transmission paths of the first UE;
wherein the transmission path identifier includes one of the following:
   a first identifier; wherein the first identifier is a unique transmission path identifier configured by the communication device for each transmission path of the first UE;
   a second identifier; wherein the second identifier is a combination of a cell identifier to which the transmission path belongs and an intra-cell transmission path identifier configured by the communication device for each transmission path of the first UE in units of cells;
   a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
   a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

One embodiment of the present disclosure provides a UE, including: a memory, a transceiver, and a processor;
wherein the memory is used to store a computer program; the processor is used to read the computer program in the memory; the transceiver is used to transmit and receive data under control of the processor and perform the following:
receiving transmission path configuration information for the first UE transmitted by a communication device;
wherein the communication device is a network device accessed by the first UE or a target UE that communicates with the first UE.

Optionally, the transmission path configuration information is determined by the communication device according to implementation of the communication device and/or auxiliary information transmitted by the first UE.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the transceiver is used to receive first transmission path configuration information transmitted by the communication device, wherein the first transmission path configuration information is used to indicate identification information of a relay UE that the first UE needs to access.

Optionally, the transmission path configuration information includes a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

One embodiment of the present disclosure provides a UE, including: a memory, a transceiver, and a processor;
wherein the memory is used to store a computer program; the processor is used to read the computer program in the memory; the transceiver is used to transmit and receive data under control of the processor and perform the following:
receiving transmission path configuration information for a first UE transmitted by a communication device;
wherein the communication device is a network device accessed by the first UE or a target UE that communicates with the first UE; and the relay UE is a relay UE used by the first UE for accessing the communication device.

Optionally, the transmission path configuration information is determined by the communication device according to implementation of the communication device and/or auxiliary information transmitted by the first UE.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the transceiver is used to receive second transmission path configuration information transmitted by the communication device, wherein the second transmission path configuration information is used to indicate identification information of a first UE that needs to establish a sidelink interface connection with the relay UE.

Optionally, the transmission path configuration information includes a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

One embodiment of the present disclosure provides a transmission path configuration apparatus, applied to a communication device, including:
a first transmission unit configured to transmit transmission path configuration information for a first user equipment (UE), to the first UE and/or a relay UE;
wherein the communication device is a network device accessed by the first UE or a target UE that communicates with the first UE; and the relay UE is a relay UE used by the first UE for accessing the communication device.

One embodiment of the present disclosure provides a transmission path configuration apparatus, applied to a first UE, including:
a first receiving unit is configured to receive transmission path configuration information for the first UE transmitted by a communication device;
wherein the communication device is a network device accessed by the first UE or a target UE that communicates with the first UE.

One embodiment of the present disclosure provides a transmission path configuration apparatus, applied to a relay UE, including:
a second receiving unit configured to receive transmission path configuration information for a first UE transmitted by a communication device;
wherein the communication device is a network device accessed by the first UE or a target UE that communicates with the first UE; and the relay UE is a relay UE used by the first UE for accessing the communication device.

One embodiment of the present disclosure provides a processor-readable storage medium, including a computer program stored thereon; wherein the computer program, when executed by a processor, causes the processor to perform steps of the above transmission path configuration method.

The beneficial effects of the above technical solutions of the present disclosure are as follows.

In the embodiment of the present application, the communication device performs transmission path configuration for the first UE, so that the first UE establishes one or more transmission paths between the first UE and the communication device according to the transmission path configuration information configured by the communication device.

### BRIEF DESCRIPTION OF THE DRAWINGS

FIG. 1 is a schematic diagram showing network structure of cellular network communication;
FIG. 2 is a schematic diagram showing network structure of sidelink communication;
FIG. 3 is a schematic diagram of U2N Relay;
FIG. 4 is a schematic diagram of U2N Relay;
FIG. 5 is a first schematic flowchart of a transmission path configuration method according to an embodiment of the present disclosure;
FIG. 6 is a second schematic flowchart of a transmission path configuration method according to an embodiment of the present disclosure;
FIG. 7 is a third schematic flowchart of a transmission path configuration method according to an embodiment of the present disclosure;
FIG. 8 is a fourth schematic flowchart of a transmission path configuration method according to an embodiment of the present disclosure;
FIG. 9 is a fifth schematic flowchart of a transmission path configuration method according to an embodiment of the present disclosure;
FIG. 10 is a sixth schematic flowchart of a transmission path configuration method according to an embodiment of the present disclosure;
FIG. 11 is a first schematic diagram of a transmission path configuration apparatus according to an embodiment of the present disclosure;
FIG. 12 is a second schematic diagram of a transmission path configuration apparatus according to an embodiment of the present disclosure;
FIG. 13 is a third schematic diagram of a transmission path configuration apparatus according to an embodiment of the present disclosure;
FIG. 14 is a schematic diagram of a communication device according to an embodiment of the present disclosure;
FIG. 15 is a first schematic diagram of a UE according to an embodiment of the present disclosure; and
FIG. 16 is a second schematic diagram of a UE according to an embodiment of the present disclosure.

### DETAILED DESCRIPTION

In order to make the technical problems, the technical solutions and the advantages of the present disclosure more apparent, the present disclosure will be described hereinafter in conjunction with the drawings and embodiments. In the following descriptions, to facilitate understanding embodiments of the present disclosure, specific configurations and specific details of components are provided. Thus, persons having ordinary skill in the art should understand that, various changes and modifications may be made to the embodiments described here, without departing from scope and spirit of the present disclosure. In addition, for clarity and simplicity, descriptions about known functions and constructions are omitted.

It is to be understood that, the phrase "one embodiment" or "an embodiment" as used throughout the specification means that a particular feature, structure, or characteristic relating to an embodiment is included in at least one embodiment of the present disclosure. Thus, "in one embodiment" or "in an embodiment" as used throughout the specification does not necessarily refer to the same embodiment. In addition, these specific features, structures, or characteristics may be combined in any suitable manner in one or more embodiments.

In various embodiments of the present disclosure, it is to be understood that, the sequence numbers of the following processes do not imply the order of execution. The order of execution of each process should be determined by its function and internal logic, which should not constitute any limitation to the implementation processes of the embodiments of the application.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

When describing the embodiments of the present disclosure, some concepts used in the following description will first be explained.

### (1) Cellular network communication

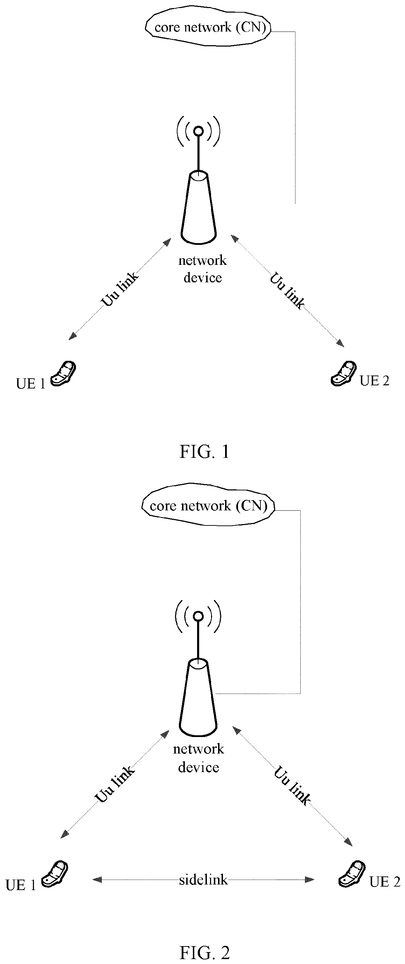

The traditional wireless communication adopts the cellular network communication mode, that is, transmission of uplink and downlink data/control information between a terminal and a network device is performed through a Uu interface, as shown in FIG. 1.

### (2) Direct communication

Direct communication refers to a method in which adjacent terminals can perform data transmission through a direct communication link (also referred as sidelink or PC5) within a short distance. A wireless interface corresponding to the sidelink link is referred as a direct communication interface (also referred as a sidelink interface, a bypass interface or a PC5 interface), as shown in FIG. 2.

### (3) Relay

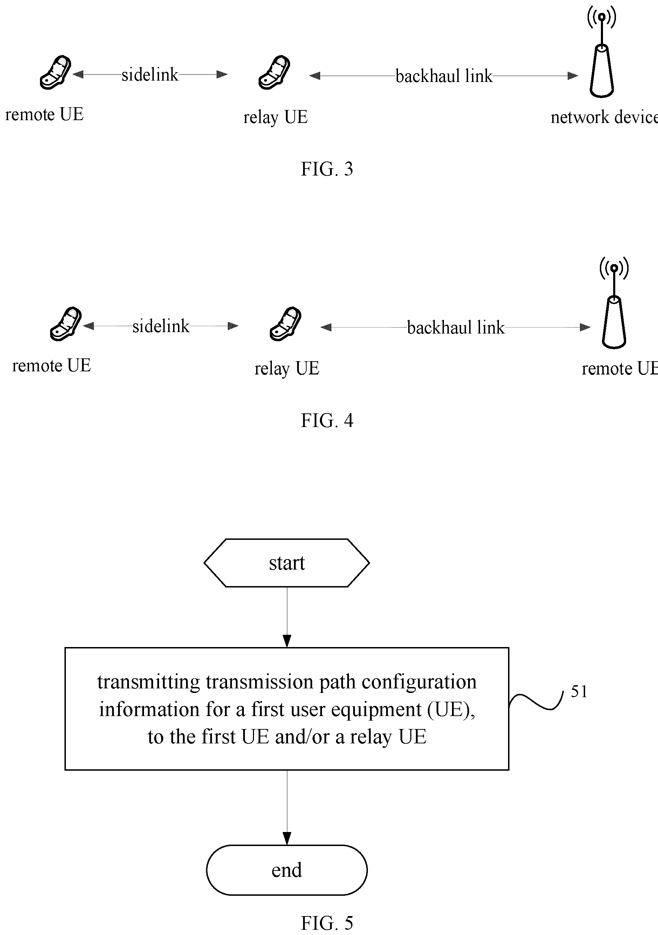

In order to expand network coverage, one solution is to introduce relays. The relay may be a UE with a relay function. For U2N Relay, an interface between a relay UE and the network device uses Uu interface, and an interface between the relay UE and a relayed UE (which may be referred as a remote UE) uses a direct communication interface (also referred as a sidelink interface or PC5 interface). The link between the relay UE and the network device may be referred as a backhaul link for the remote UE. The U2N Relay is shown in FIG. 3.

For Layer-2 (Layer2, L2) U2N Relay scenario, bearers are divided into three categories:
1) sidelink interface bearer: that is, a bearer between the remote UE and the relay UE;
2) End-to-end bearer between the remote UE and the network device: that is, an end-to-end bearer established between the remote UE and the network device;
3) a bearer of the remote UE on the Uu interface (also referred to as a backhaul link bearer): that is, a bearer between the relay UE and the network device for carrying data of the remote UE.

In order to expand network coverage of U2U, the U2U Relay is also introduced, as shown in FIG. 4.

For the L2 U2U relay scenario, bearers are divided into three categories:
1) sidelink interface bearer: that is, a bearer between a remote UE and a relay UE;
2) an end-to-end bearer between a remote UE and a target remote UE: that is, an end-to-end bearer established between the remote UE and the network device;
3) a bearer between the relay UE and the target remote UE (also called a backhaul link bearer): that is, a bearer between the relay UE and the network device for carrying data of the remote UE.

After introduction of the relay device, there may be multiple paths (or links) in the communication between the remote UE and the network device or the target remote terminal. For convenience of description, the following two terms are introduced:
Direct path: transmitting and receiving nodes can communicate directly without relaying through relay UEs;
Indirect path: transmitting and receiving nodes cannot communicate directly, and data transmission between the transmitting and receiving nodes needs to be relayed through relay UEs.

Specifically, one embodiment of the present disclosure provides a transmission path configuration method, which provides a solution for multi-path transmission configuration in a relay scenario.

As shown in FIG. 5, one embodiment of the present disclosure provides a transmission path configuration method, performed by a communication device, and specifically includes the following steps.

Step 51: transmitting, by the communication device, transmission path configuration information for a first user equipment (UE), to the first UE and/or a relay UE; where the relay UE is a relay UE used by the first UE for accessing the communication device.

The communication device is a network device accessed by the first UE or a target UE that communicates with the first UE. The target UE may be a communication peer terminal that communicates with the first UE.

In one embodiment of the present disclosure, the communication device performs transmission path configuration on the first UE, so that the first UE establishes one or more transmission paths with the communication device according to the transmission path configuration information configured by the communication device.

Optionally, the method further includes:
determining, by the communication device, the transmission path configuration information for the first UE, according to implementation of the communication device;
   and/or,
determining, by the communication device, the transmission path configuration information for the first UE, according to auxiliary information received from the first UE.

In this embodiment, the communication device may perform the transmission path configuration for the first UE based on implementation of the communication device itself and/or the auxiliary information reported by the first UE. A communication connection has been established between the first UE and the communication device, for example, the first UE has established a connection with the network device through a Uu interface, or the first UE has established a connection with the network device through a relay UE. On the basis that the first UE establishes a communication connection with the communication device, the communication device determines the transmission path configuration information configured for the first UE based on the implementation of the communication device itself and/or the auxiliary information of the first UE, and transmits the transmission path configuration information to the first UE or the relay UE through which the first UE accesses the communication device. The first UE and/or the relay UE establishes a communication connection between the first UE, the relay UE and the communication device according to the transmission path configuration information.

In the embodiment of the present disclosure, the communication device performs the transmission path configuration for the first UE based on the implementation of the communication device and/or the auxiliary information reported by the first UE, so that the first UE establishes one or more transmission paths with communication device, according to transmission path configuration information configured by the communication device.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE; where the channel quality may include: sidelink discovery reference signal received power (SD-RSRP) and/or sidelink reference signal received power (SL-RSRP);
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

In this embodiment, the auxiliary information is transmitted by the first UE to the communication device. Optionally, transmission signaling of the auxiliary information includes one of the following:
1) RRC signaling between the first UE and the communication device;
2) MAC CE over the Uu interface; if there is a direct Uu interface between the first UE and the communication device, the auxiliary information may be transmitted through the MAC CE over the Uu interface;
3) Physical layer signaling over the Uu interface; if there is a direct Uu interface between the first UE and the communication device, the auxiliary information may be transmitted through the physical layer signaling over the Uu interface;
4) MAC CE over sidelink interface; if there is a sidelink interface between the first UE and the communication device, the auxiliary information may be transmitted through the MAC CE over the sidelink interface.
5) Physical layer signaling over the sidelink interface; if there is a sidelink interface between the first UE and the communication device, the auxiliary information may be transmitted through physical layer signaling over the sidelink interface.

Optionally, the cell is a cell discovered by the first UE when the first UE performs cell search; and/or, the cell is a cell detected by the first UE through cell measurement. The relay UE is a relay UE discovered by the first UE when the first UE performs relay discovery.

Optionally, the cell satisfies a first condition; where the first condition includes: channel quality of a Uu interface of the cell is greater than a first threshold.

The relay UE satisfies a second condition; where the second condition includes: an access stratum criterion and a non-access stratum criterion. The access stratum criterion includes: channel quality of a Uu interface and/or PC5 interface of the relay UE is greater than a second threshold value. The non-access stratum criterion includes: a policy of whether the relay UE is allowed to serve as a relay.

In this embodiment, when the first UE performs cell search and/or cell measurement, the first UE may filter cells obtained by cell search and/or cell measurement to obtain cells that satisfy the first condition, and report the relevant auxiliary information of the cells that satisfies the first condition. A condition for filtering the cells may be that a channel quality of a Uu interface of a cell is higher than a specific threshold (that is, the first threshold value), and the first threshold value may be a configured by the communication device or preconfigured.

When the first UE performs the relay discovery operation, the first UE may filter relay UEs obtained by the relay discovery to obtain relay UEs that satisfy the second condition, and report relevant auxiliary information of the relay UEs that satisfy the second condition. A condition for filtering the relay UEs may include an access stratum (AS) criterion and/or a non-access stratum (NAS) criterion. Specifically, the AS criterion may be that a channel quality of a Uu interface and/or PC5 interface of a relay UE is higher than a specific threshold (that is, the second threshold value), and the second threshold value may be configured by the communication device or preconfigured. The NAS criteria may be defined by higher layers.

As an optional embodiment, the method further includes: transmitting first indication information to the first UE; where the first indication information is used to instruct the first UE to perform a first operation, and the first operation includes at least one of cell search, cell measurement and relay UE discovery.

In this embodiment, conditions for the first UE to perform the cell search, cell measurement and relay UE discovery operations may be that: the communication device transmits the first indication information to the first UE, and the first UE performs the first operation according to the first indication information; or, based on its own implementation of the first UE, the first UE determines that it needs to perform at least one operation from cell search, cell measurement and relay UE discovery. Factors specifically considered by implementation of the first UE itself may include a quality of service (QoS) requirement of services of the first UE, such as a peak rate requirement or a reliability requirement.

As an optional embodiment, transmitting, by the communication device, transmission path configuration information for the first UE to the first UE and/or the relay UE, includes at least one of the following:
transmitting first transmission path configuration information to the first UE, where the first transmission path configuration information is used to indicate identification information of a relay UE that the first UE needs to access;
transmitting second transmission path configuration information to the relay UE, where the second transmission path configuration information is used to indicate identification information of a first UE that needs to establish a sidelink interface connection with the relay UE.

In this embodiment, when the communication device performs the transmission path configuration for the first UE, the communication device may transmit the transmission path configuration information to the first UE and/or the relay UE, which may specifically include that the communication device transmit the first transmission path configuration information to the first UE, where the first transmission path configuration information is used to indicate identification information of a relay UE that the first UE needs to establish a sidelink interface connection with (i.e., a relay UE that the first UE needs to access); and/or, the communication device transmits the second transmission path configuration information to the relay UE, and the second transmission path configuration information is used to indicate identification information of a remote UE (i.e., the first UE) that the relay UE needs to establish a sidelink interface connection with.

After the communication device transmits the transmission path configuration information to the first UE and/or the relay UE, the first UE and the relay UE may establish a communication connection, thereby realizing a communication connection of one or more transmission paths between the first UE, the relay UE and the communication device.

Optionally, the method further includes: configuring a transmission path identifier for all or part of transmission paths of the first UE.

In this embodiment, the transmission path identifier may include one of the following:
a first identifier; where the first identifier is a unique transmission path identifier configured by the communication device for each transmission path of the first UE; specifically, the communication device may jointly number each path (including direct and indirect paths) aggregated by the first UE, that is, each path corresponding to the first UE may be uniquely identified by a path identity document (ID);
a second identifier; where the second identifier is a combination of a cell identifier to which the transmission path belongs and an intra-cell transmission path identifier configured by the communication device for each transmission path of the first UE in units of cells; specifically, the communication device may jointly number each path aggregated by the first UE in units of cells, and each transmission path in the cell is uniquely identified through a combination of a cell ID to which the transmission path belongs and a path ID of the transmission path in the cell;
a third identifier; where the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE; specifically, for the direct path in the transmission paths of the first UE, it is identified by the cell ID of the cell to which the direct path belongs; for the indirect path in the transmission paths of the first UE, all indirect paths aggregated by the first UE are jointly numbered, and the indirect path is uniquely identified by an indirect path identifier (path ID) of the first UE;
a fourth identifier; where the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

Specifically, for the direct path in the transmission paths of the first UE, it is identified by the cell ID of the cell to which the direct path belongs; for the indirect path in the transmission paths of the first UE, transmission paths in each cell aggregated by the first UE are jointly numbered in units of cells, that is, the indirect path of the first UE can be uniquely identified by a combination of a cell ID of a cell to which the indirect path belongs and a path ID of the indirect path in the cell.

Optionally, the method further includes: receiving UE capability information transmitted by the first UE, where the UE capability information is used to indicate that the first UE supports transmission using multiple transmission paths.

In this embodiment, before the communication device determines the transmission path configuration information for the first UE according to implement of the communication device and/or the auxiliary information received from the first UE, the communication device receives the UE capability information reported by the first UE, where the UE capability information includes a capability indication of whether the first UE supports transmission using multiple transmission paths. The communication device determines whether the first UE needs transmission path configuration for multi-path transmission according to the UE capability information reported by the first UE, thereby determining the transmission path configuration information for the first UE.

Specifically, the capability indication information that the first UE supports transmission using multiple transmission paths may specifically refer to whether the first UE supports simultaneous use of multiple transmission paths composed of a direct path and an indirect path. Furthermore, the capability of the first UE may also be indicated for different scenarios, for example, based on a frequency, a cell or a cell set, indicating whether the first UE supports simultaneous use of multiple transmission paths composed of direct paths and indirect paths in the frequency, cell or cell set; for another example, based on frequency combination or multiple cell sets, indicating whether the first UE supports simultaneous use of multiple transmission paths composed of direct paths and indirect paths in the frequency combination or multiple cell sets.

Specific implementation process of the transmission path configuration method in the embodiment of the present disclosure will be described herein after for different relay scenarios.

As an optional embodiment, the U2N relay scenario includes a transmission path configuration process of multiple transmission paths.

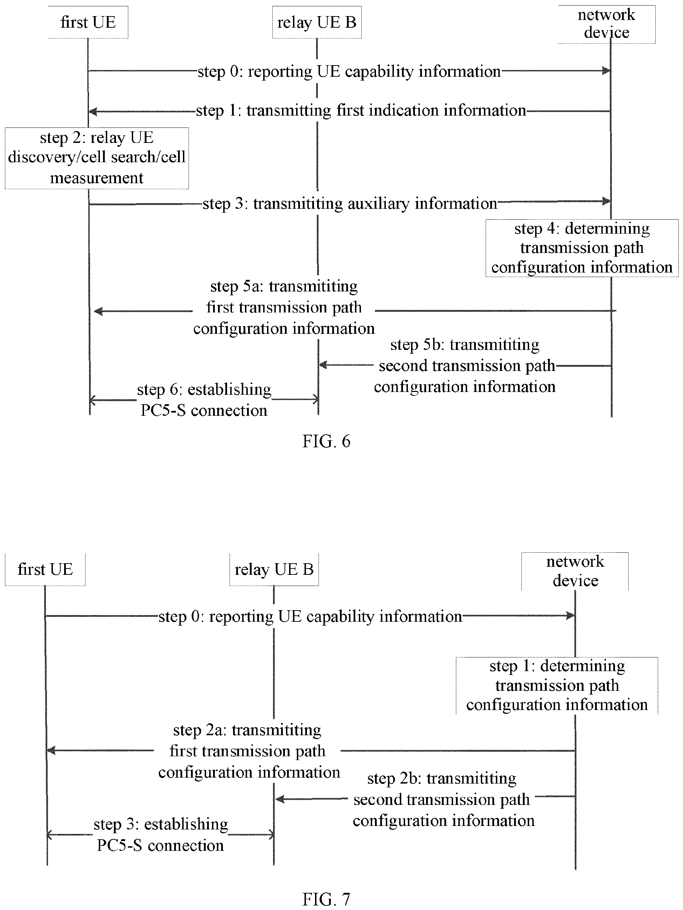

Taking the communication device being a network device is taken as an example, as shown in FIG. 6.

It is to be noted that the premise of this embodiment is that a communication connection has been established between a first UE and the network device. For example, the first UE has established a connection with the network device through the Uu interface, or, the first UE has established a connection with the network device through a relay UE A. Further, if the first UE needs to establish a path transmission including multipath with the network device, the process may further include:

Step 0: the first UE reports UE capability information to the network device.

In this step, the first UE needs to report the UE capability information of the UE to the network device, and the UE capability information includes a capability indication of whether the first UE supports transmission using multiple transmission paths.

Step 1: the network device transmits first indication information to the first UE.

The network device judges that the first UE needs transmission path configuration of multiple transmission paths, and one specific judgment method may depend on implementation of the network device, for example, the network device determines it based on QoS parameters of uplink and downlink services of the first UE.

If the network device judges that the first UE needs transmission path configuration of multiple transmission paths, the network device transmits first indication information to the first UE, and the first indication information is used to instruct the first UE to perform at least one operation from cell search, cell measurement and relay UE discovery.

The signaling used for transmission of the first indication information may be one of the following:
(1) End-to-end RRC signaling between the first UE and the network device.
   The method (1) has universal applicability, and is applicable not only to the situation where there is a Uu interface for direct communication between the first UE and the network device, but also to the scenario where the first UE and the network device are connected through a relay UE.
(2) If there is a Uu interface for direct communication between the first UE and the network device, the first indication information may be MAC CE or physical layer signaling over the Uu interface. The method (2) is only applicable to the scenario where there is a Uu interface for direct communication between the first UE and the network device.

Step 2: the first UE performs relay UE discovery/cell search/cell measurement.

The first UE receives the first indication information transmitted by the network device, and performs relay UE discovery/cell search/cell measurement. The specific process of relay UE discovery/cell search/cell measurement can follow the flow in the related art.

Step 3: the first UE transmits auxiliary information to the network device. The content of the auxiliary information may be one or a combination of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

The cell is a cell discovered by the first UE when the first UE performs cell search and/or cell measurement; the relay UE is a relay UE discovered by the first UE when the first UE performs relay discovery.

Optionally, the first UE may further perform filtering on the cells and/or relay UEs, and only report cells and/or relay UEs that satisfy a filtering condition.

Specifically, the filtering condition for the cell may be that the channel quality of the Uu interface of the cell is higher than a specific threshold (that is, the first threshold value), and the threshold may be configured by the network device or pre-configured.

The filtering condition for the relay UE may include AS criteria and/or NAS criteria. Specifically, the AS criteria may be that: the channel quality of Uu and/or PC5 of the relay UE is higher than a specific threshold (i.e., the second threshold), the threshold may be configured by the network device or pre-configured, and the NAS criterion may be defined by a high layer.

Step 4: the network device determines the transmission path configuration information.

The network device receives the auxiliary information reported by the first UE in the step 3. Based on implementation of the network device (for example, according to QoS requirements of services of the first UE, such as delay requirements, reliability requirements, peak rate requirements), if the network device determines that multipath transmission needs to be configured for the first UE, then the network device performs transmission path configuration including multipath for the first UE.

Optionally, when the network device performs transmission path configuration for the first UE, in order to simplify signaling overhead, a transmission path identifier may be configured for all or part of transmission paths of the first UE, and the transmission path identifier can include one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

Step 5a/5b: the network device performs transmission path configuration for the first UE.

Specifically, the manner in which the network device performs transmission path configuration for the first UE may be one or a combination of the following:
1) the network device transmits first transmission path configuration information to the first UE, and the first transmission path configuration information is used to indicate identification information of a relay UE that the first UE needs to access; (that is, Step 5a shown in FIG. 6).
2) the network device transmits second transmission path configuration information to a relay UE selected by the network device (that is, the relay UE B), and the second transmission path configuration information is used to indicate identification information of a remote terminal (that is, the first UE) that needs to establish a sidelink interface connection with the relay UE; (that is, Step 5b shown in FIG. 6).

Step 6: the first UE establishes a PC5-S connection with the relay UE B indicated by the network device.

Optionally, if there is no RRC connection between the relay UE B and the network device, an RRC connection also needs to be established between the relay UE B and the network device.

Through the above steps, the first UE can establish multiple transmission paths with the network device. For example, there may be multiple different paths connected through relay UEs at the same time between the first UE and the network device, there may be a direct Uu interface transmission path and a transmission path connected through the relay UE at the same time.

As an optional embodiment, the U2N relay scenario includes a multi-path transmission path configuration process. The communication device being a network device is taken as an example, as shown in FIG. 7.

It is to be noted that the premise of this embodiment is that a communication connection has been established between the first UE and the network device. For example, the first UE has established a connection with the network device through the Uu interface, or, the first UE has established a connection with the network device through a relay UE A. Further, if the first UE needs to establish a path transmission including multi-path with the network device, the specific implementation process may further include:
Step 0: the first UE reports UE capability information to the network device.

In this step, the first UE needs to report the UE capability information of the UE to the network device, and the UE capability information includes a capability indication of whether the first UE supports transmission using multiple transmission paths.

Step 1: the network device determines transmission path configuration information.

Based on implementation of the network device (for example, according to QoS requirements of services of the first UE, such as delay requirements, reliability requirements, peak rate requirements), if the network device determines that transmission path configuration including multipath needs to be configured for the first UE, then the network device performs transmission path configuration including multipath for the first UE.

Optionally, when the network device performs transmission path configuration for the first UE, in order to simplify signaling overhead, a transmission path identifier may be configured for all or part of transmission paths of the first UE, and the transmission path identifier can include one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

Step 2a/2b: the network device performs transmission path configuration for the first UE, that is, determines transmission path configuration information.

Specifically, the manner in which the network device performs transmission path configuration for the first UE may be one or a combination of the following:
1) the network device transmits first transmission path configuration information to the first UE, and the first transmission path configuration information is used to indicate identification information of a relay UE that the first UE needs to access; (that is, Step 2a shown in FIG. 7).
2) the network device transmits second transmission path configuration information to a relay UE B selected by the network device, and the second transmission path configuration information is used to indicate identification information of a remote terminal (that is, the first UE) that needs to establish a sidelink interface connection with the relay UE B; (that is, Step 2b shown in FIG. 7).

Step 3: the first UE establishes a PC5-S connection with the relay UE B indicated by the network device.

Optionally, if there is no RRC connection between the relay UE B and the network device, an RRC connection needs to be established between the relay UE B and the network device.

Through the above steps, the first UE can establish multiple transmission paths with the network device. For example, there may be multiple different paths connected through relay UEs at the same time between the first UE and the network device, there may be a direct Uu interface transmission path and a transmission path connected through the relay UE at the same time.

As an optional embodiment, the U2U relay scenario includes a multi-path transmission path configuration process.

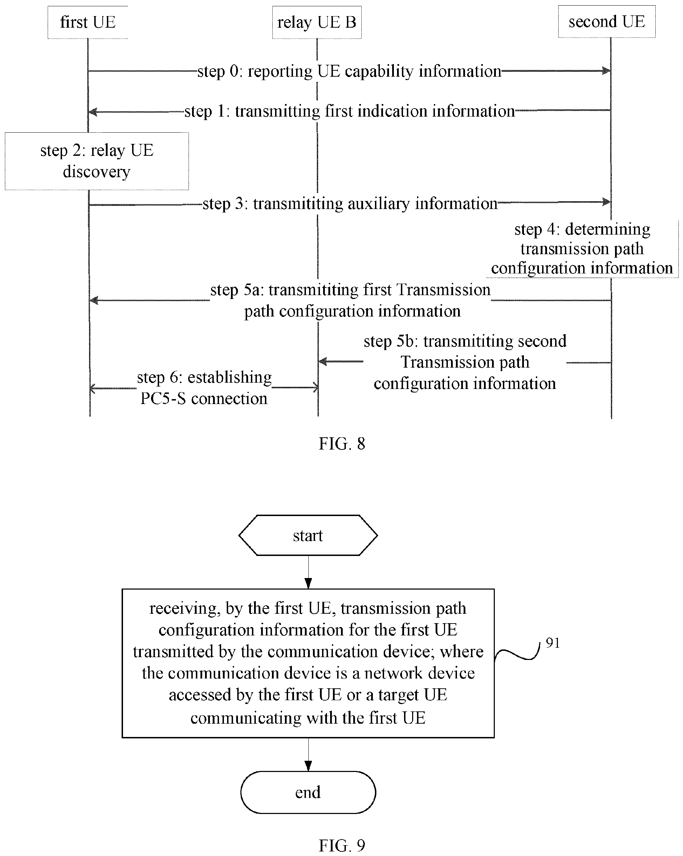

Here, an example in which the communication device is a target UE for communication with the first UE and is represented by a second UE, is provided for illustration, as shown in FIG. 8.

It is to be noted that the premise of this embodiment is that a communication connection has been established between the first UE and the second UE. For example, the first UE has established a connection with the second UE through the Uu interface, or, the first UE has established a connection with the second UE through a relay UE A. Further, if the first UE needs to establish a path transmission including multi-path with the second UE, the specific implementation process may further include:
Step 0: the first UE reports UE capability information to the second UE.

In this step, the first UE needs to report the UE capability information of the first UE to the second UE, and the UE capability information includes a capability indication of whether the first UE supports transmission using multiple transmission paths.

Step 1: the second UE transmits first indication information to the first UE.

If the second UE judges that the first UE needs transmission path configuration of multiple transmission paths, the second UE transmits first indication information to the first UE, and the first indication information is used to instruct the first UE to perform relay UE discovery.

The signaling used for transmission of the first indication information may be one of the following:
(1) End-to-end RRC signaling between the first UE and the second UE.
   The method (1) has universal applicability, and is applicable not only to the situation where there is sidelink interface for direct communication between the first UE and the second UE, but also to the scenario where the first UE and the second UE are connected through a relay UE.
(2) If there is a sidelink interface for direct communication between the first UE and the second UE, the first indication information may be MAC CE or physical layer signaling over the sidelink interface.

The method (2) is only applicable to the scenario where there is a sidelink interface for direct communication between the first UE and the second UE.

Step 2: the first UE performs relay UE discovery.

The first UE receives the first indication information transmitted by the second UE, and performs relay UE discovery. The specific process of relay UE discovery can follow the process in the related art.

Step 3: the first UE transmits auxiliary information to the second UE. The content of the auxiliary information may be one or a combination of the following:
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the second UE;
carrier identity information between a relay UE and the second UE;
BWP identity information between a relay UE and the second UE;
carrier identity information of a sidelink interface between a relay UE and the first UE;
BWP identity information of a sidelink interface between a relay UE and the second UE.

The relay UE is a relay UE discovered when the first UE performs relay discovery.

Optionally, the first UE may also perform filtering on relay UEs, and only report relay UEs that satisfy a filtering condition.

The filtering condition for the relay UE may include AS criteria and/or NAS criteria. Specifically, the AS criteria may be that: the channel quality of Uu and/or PC5 of the relay UE is higher than a specific threshold, the threshold may be configured by the network device or pre-configured, and the NAS criterion may be defined by a high layer.

Step 4: the second UE determines transmission path configuration information.

The second UE receives the second indication information reported by the first UE in the above step 3. Based on implementation of the second UE (for example, according to QoS requirements of services of the first UE, such as delay requirements, reliability requirements, peak rate requirements), if the second UE determines that multipath transmission needs to be configured for the first UE, then the second UE performs transmission path configuration for the first UE.

Considering that there may be multiple paths in a cell, for example, there is both of a direct path and an indirect path at the same time, in order to simplify signaling overhead, a path ID may be configured for each path or each indirect path.

Specifically, when the second UE performs transmission path configuration for the first UE, in order to simplify signaling overhead, a transmission path identifier may be configured for all or part of transmission paths of the first UE, and the transmission path identifier can include one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

Step 5a/5b: the second UE performs transmission path configuration for the first UE.

Specifically, the manner in which the second UE performs transmission path configuration for the first UE may be one or a combination of the following:
1) the second UE transmits first transmission path configuration information to the first UE, and the first transmission path configuration information is used to indicate identification information of a relay UE that the first UE needs to access; (that is, Step 5a shown in FIG. 8).
2) the second UE transmits second transmission path configuration information to a relay UE (that is, the relay UE B) selected by the second UE, and the second transmission path configuration information is used to indicate identification information of a remote terminal (that is, the first UE) that needs to establish a sidelink interface connection with the relay UE; (that is, Step 5b shown in FIG. 8).

Step 6: the first UE establishes a PC5-S connection with the relay UE B indicated by the second UE.

Through the above steps, the first UE can establish multiple transmission paths with the second UE. For example, there may be multiple different paths connected through relay UEs at the same time between the first UE and the second UE, there may be a sidelink interface transmission path and a transmission path connected through the relay UE at the same time.

In the embodiment of the present disclosure, the communication device performs transmission path configuration for the first UE based on the implementation of the communication device and/or the auxiliary information reported by the first UE, so that the first UE establishes one or more transmission paths between the first UE and the communication device according to the transmission path configuration information configured by the communication device.

As shown in FIG. 9, one embodiment of the present disclosure further provides a transmission path configuration method performed by a first UE, including:
Step 91: receiving, by the first UE, transmission path configuration information for the first UE transmitted by the communication device.

Optionally, the transmission path configuration information is determined by the communication device according to implementation of the communication device and/or auxiliary information transmitted by the first UE; where the communication device is a network accessed by the first UE or a target UE that communicates with the first UE.

In this embodiment, the communication device may perform the transmission path configuration for the first UE based on implementation of the communication device itself and/or the auxiliary information reported by the first UE. On the basis that the first UE establishes a communication connection with the communication device, the communication device determines the transmission path configuration information configured for the first UE based on the implementation of the communication device itself and/or the auxiliary information of the first UE, and transmits the transmission path configuration information to the first UE. The first UE establishes a communication connection between the first UE, the relay UE through which the first UE accesses the communication device and the communication device according to the transmission path configuration information.

In the embodiment of the present disclosure, the communication device transmits the configured transmission path configuration information to the first UE, so that the first UE establishes one or more transmission paths with communication device, according to transmission path configuration information configured by the communication device.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE; where the channel quality may include: sidelink discovery reference signal received power (SD-RSRP) and/or sidelink reference signal received power (SL-RSRP);
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the method further includes: transmitting the auxiliary information to the communication device. The transmission signaling of the auxiliary information may include one of the following:
1) RRC signaling between the first UE and the communication device;
2) MAC CE over the Uu interface; if there is a direct Uu interface between the first UE and the communication device, the auxiliary information may be transmitted through the MAC CE over the Uu interface;
3) Physical layer signaling over the Uu interface; if there is a direct Uu interface between the first UE and the communication device, the auxiliary information may be transmitted through the physical layer signaling over the Uu interface;
4) MAC CE over sidelink interface; if there is a sidelink interface between the first UE and the communication device, the auxiliary information may be transmitted through the MAC CE over the sidelink interface.
5) Physical layer signaling over the sidelink interface; if there is a sidelink interface between the first UE and the communication device, the auxiliary information may be transmitted through physical layer signaling over the sidelink interface.

Optionally, the cell is a cell discovered by the first UE when the first UE performs cell search; and/or, the cell is a cell detected by the first UE through cell measurement. The relay UE is a relay UE discovered by the first UE when the first UE performs relay discovery.

Optionally, the cell satisfies a first condition; where the first condition includes: channel quality of a Uu interface of the cell is greater than a first threshold.

The relay UE satisfies a second condition; where the second condition includes: an access stratum criterion and a non-access stratum criterion. The access stratum criterion includes: channel quality of a Uu interface and/or PC5 interface of the relay UE is greater than a second threshold value. The non-access stratum criterion includes: a policy of whether the relay UE is allowed to serve as a relay.

In this embodiment, when the first UE performs cell search and/or cell measurement, the first UE may filter cells obtained by cell search and/or cell measurement to obtain cells that satisfy the first condition, and report the relevant auxiliary information of the cells that satisfies the first condition. A condition for filtering the cells may be that a channel quality of a Uu interface of a cell is higher than a specific threshold (that is, the first threshold value), and the first threshold value may be a configured by the communication device or preconfigured.

When the first UE performs the relay discovery operation, the first UE may filter relay UEs obtained by the relay discovery to obtain relay UEs that satisfy the second condition, and report relevant auxiliary information of the relay UEs that satisfy the second condition. A condition for filtering the relay UEs may include an access stratum (AS) criterion and/or a non-access stratum (NAS) criterion. Specifically, the AS criterion may be that a channel quality of a Uu interface and/or PC5 interface of a relay UE is higher than a specific threshold (that is, the second threshold value), and the second threshold value may be configured by the communication device or preconfigured. The NAS criteria may be defined by higher layers.

Optionally, the method further includes:
receiving first indication information transmitted by the communication device; performing a first operation according to the first indication information; or performing a first operation based on UE implementation of the first UE; where the first operation includes at least one of cell search, cell measurement, and relay UE discovery.

In this embodiment, conditions for the first UE to perform the cell search, cell measurement and relay UE discovery operations may be that: the communication device transmits the first indication information to the first UE, and the first UE performs the first operation according to the first indication information; or, based on its own implementation of the first UE, the first UE determines that it needs to perform at least one operation from cell search, cell measurement and relay UE discovery. Factors specifically considered by implementation of the first UE itself may include a quality of service (QoS) requirement of services of the first UE, such as a peak rate requirement or a reliability requirement.

Optionally, the receiving transmission path configuration information for the first UE transmitted by the communication device, includes: receiving first transmission path configuration information transmitted by the communication device, where the first transmission path configuration information is used to indicate identification information of a relay UE that the first UE needs to access.

In this embodiment, when the communication device performs the transmission path configuration for the first UE, the communication device may transmit the transmission path configuration information to the first UE, which may specifically include that the communication device transmit the first transmission path configuration information to the first UE, where the first transmission path configuration information is used to indicate identification information of a relay UE that the first UE needs to establish a sidelink interface connection with (i.e., a relay UE that the first UE needs to access). The first UE establishes one or more transmission paths between the first UE, the relay UE and the communication device according to the first transmission path configuration information.

Optionally, the communication device may further transmit second transmission path configuration information to the relay UE, where the second transmission path configuration information is used to indicate identification information of a remote UE (that is, the first UE) that needs to establish a sidelink interface connection with the relay UE, thereby realizing a communication connection of one or more transmission paths between the first UE, the relay UE and the communication device.

Optionally, the communication device configures transmission path identifiers for all or part of the transmission paths of the first UE, and the transmission path configuration information includes: transmission path identifiers of all or part of the transmission paths of the first UE.

In this embodiment, considering that there may be multiple paths in a cell, for example, there are both of a direct path and an indirect path at the same time, in order to simplify signaling overhead, a path ID may be configured for each path or each indirect path.

Optionally, the transmission path identifier may include one of the following:
a first identifier; where the first identifier is a unique transmission path identifier configured by the communication device for each transmission path of the first UE;
a second identifier; where the second identifier is a combination of a cell identifier to which the transmission path belongs and an intra-cell transmission path identifier configured by the communication device for each transmission path of the first UE in units of cells;
a third identifier; where the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; where the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

Optionally, the method further includes: transmitting UE capability information to the communication device, where the UE capability information is used to indicate that the first UE supports transmission using multiple transmission paths.

In this embodiment, the first UE further needs to report UE capability information to the communication device, so as to indicate that the first UE supports transmission using multiple transmission paths. The communication device receives the UE capability information reported by the first UE, determines whether the first UE needs transmission path configuration for multi-path transmission according to the UE capability information, and then determines the transmission path configuration information for the first UE and transmits the transmission path configuration information to the first UE.

In the embodiment of the present application, the communication device performs transmission path configuration for the first UE based on the implementation of the communication device and/or auxiliary information reported by the first UE, and transmits the configured transmission path configuration information to the first UE, so that the first UE establishes one or more transmission paths between the first UE and the communication device according to the transmission path configuration information configured by the communication device.

It is to be noted that, in the above embodiment of the method applied to the communication device, the embodiments related to the first UE are all applicable to the embodiment of the method applied to the first UE, for example, the transmission path configuration method shown in FIG. 6 to FIG. 8, which is not repeated here.

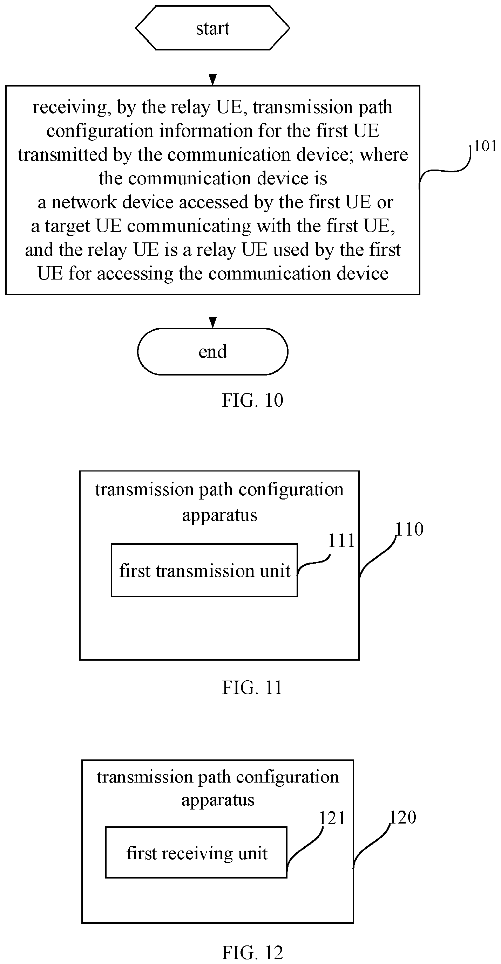

As shown in FIG. 10, one embodiment of the present disclosure further provides a transmission path configuration method performed by a relay UE, including:

Step 101: receiving, by the relay UE, transmission path configuration information for a first UE transmitted by the communication device.

Optionally, the transmission path configuration information is determined by the communication device according to implementation of the communication device and/or auxiliary information transmitted by the first UE.

The communication device is a network device accessed by the first UE or a target UE that communicates with the first UE; and the relay UE is a relay UE used by the first UE for accessing the communication device.

In this embodiment, the communication device performs transmission path configuration for the first UE based on the implementation of the communication device and/or auxiliary information reported by the first UE, determines the transmission path configuration information configured for the first UE, and transmits the transmission path configuration information to the first UE or the relay UE through which the first UE accesses the communication device. The first UE and/or the relay UE establishes a communication connection between the first UE, the relay UE and the communication device according to the transmission path configuration information.

In the embodiment of the present disclosure, the communication device performs the transmission path configuration for the first UE based on the implementation of the communication device and/or the auxiliary information reported by the first UE, transmits the transmission path configuration information to the relay UE, so that the relay UE establishes a communication connection with the first UE according to the transmission path configuration information configured by the communication device, thereby establishing one or more transmission paths between the first UE and the communication device.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE; where the channel quality may include: sidelink discovery reference signal received power (SD-RSRP) and/or sidelink reference signal received power (SL-RSRP);
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

The cell is a cell discovered by the first UE when the first UE performs cell search; and/or, the cell is a cell detected by the first UE through cell measurement. The relay UE is a relay UE discovered by the first UE when the first UE performs relay discovery.

Optionally, the cell satisfies a first condition; where the first condition includes: channel quality of a Uu interface of the cell is greater than a first threshold.

The relay UE satisfies a second condition; where the second condition includes: an access stratum criterion and a non-access stratum criterion. The access stratum criterion includes: channel quality of a Uu interface and/or PCS interface of the relay UE is greater than a second threshold value. The non-access stratum criterion includes: a policy of whether the relay UE is allowed to serve as a relay.

In this embodiment, the auxiliary information is reported by the first UE. When the first UE performs cell search and/or cell measurement, the first UE may filter cells obtained by cell search and/or cell measurement to obtain cells that satisfy the first condition, and report the relevant auxiliary information of the cells that satisfies the first condition. A condition for filtering the cells may be that a channel quality of a Uu interface of a cell is higher than a specific threshold (that is, the first threshold value), and the first threshold value may be a configured by the communication device or preconfigured.

When the first UE performs the relay discovery operation, the first UE may filter relay UEs obtained by the relay discovery to obtain relay UEs that satisfy the second condition, and report relevant auxiliary information of the relay UEs that satisfy the second condition. A condition for filtering the relay UEs may include an access stratum (AS) criterion and/or a non-access stratum (NAS) criterion. Specifically, the AS criterion may be that a channel quality of a Uu interface and/or PCS interface of a relay UE is higher than a specific threshold (that is, the second threshold value), and the second threshold value may be configured by the communication device or preconfigured. The NAS criteria may be defined by higher layers.

After receiving the auxiliary information, the communication device determines, according to the auxiliary information, transmission path configuration information for the first UE, and transmits the transmission path configuration information to a relay UE that needs to establish a communication connection with the first UE.

Optionally, the receiving transmission path configuration information for the first UE transmitted by the communication device includes: receiving second transmission path configuration information transmitted by the communication device, where the second transmission path configuration information is used to indicate identification information of a first UE that needs to establish a sidelink interface connection with the relay UE.

In this embodiment, when the communication device performs the transmission path configuration for the first UE, the communication device may transmit the transmission path configuration information to the relay UE that needs to establish a sidelink interface connection with the first UE, which may specifically include that the communication device transmit the second transmission path configuration information to the relay UE, where the second transmission path configuration information is used to indicate identification information of a remote UE (that is, the first UE) that needs to establish a sidelink interface connection with the relay UE.

When the communication device performs the transmission path configuration for the first UE, the communication device may further transmit first transmission path configuration information to the first UE, where the first transmission path configuration information is used to indicate identification information of a relay UE that the first UE needs to establish a sidelink interface connection with (that is, a relay UE that the first UE needs to access).

After the relay UE receives the second transmission path configuration information, the relay UE establishes a sidelink interface connection with the first UE according to the second transmission path configuration information, thereby realizing a communication connection of one or more transmission paths between the first UE, the relay UE and the communication device.

Optionally, the communication device configures a transmission path identifier for all or part of the transmission paths of the first UE. Then the transmission path configuration information includes: transmission path identifiers of all or part of the transmission paths of the first UE.

In this embodiment, considering that there may be multiple paths in a cell, for example, there are both of a direct path and an indirect path at the same time, in order to simplify signaling overhead, a path ID may be configured for each path or each indirect path.

In this embodiment, the transmission path identifier may include one of the following:
a first identifier; where the first identifier is a unique transmission path identifier configured by the communication device for each transmission path of the first UE;
a second identifier; where the second identifier is a combination of a cell identifier to which the transmission path belongs and an intra-cell transmission path identifier configured by the communication device for each transmission path of the first UE in units of cells;
a third identifier; where the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; where the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

In the embodiment of the present disclosure, the communication device performs transmission path configuration for the first UE, and transmits the transmission path configuration information to the relay UE, so that the relay UE establishes a communication connection with the first UE according to the transmission path configuration information configured by the communication device, thereby establishing one or more transmission paths between the first UE and the communication device.

It is to be noted that, in the above embodiment of the method applied to the communication device, the embodiments related to the relay UE are all applicable to the embodiment of the method applied to the relay UE, for example, the transmission path configuration method shown in FIG. 6 to FIG. 8, which is not repeated here.

The above embodiment introduces the transmission path configuration method of the present disclosure, and the following embodiment will further describe corresponding apparatus in conjunction with the accompanying drawings.

Specifically, as shown in FIG. 11, one embodiment of the present disclosure provides a transmission path configuration apparatus 110, which is applied to a communication device, including:
a first transmission unit 111 configured to transmit transmission path configuration information for a first UE to the first UE and/or a relay UE;
where the communication device is a network device accessed by the first UE or a target UE that communicates with the first UE; and the relay UE is a relay UE used by the first UE for accessing the communication device.

Optionally, the apparatus further includes: a first determining unit configured to determine the transmission path configuration information for the first UE according to the implementation of the communication device;
and/or
determine the transmission path configuration information for the first UE according to auxiliary information received from the first UE.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE; where the channel quality may include: sidelink discovery reference signal received power (SD-RSRP) and/or sidelink reference signal received power (SL-RSRP);
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the cell is a cell discovered by the first UE when the first UE performs cell search;
and/or,
the cell is a cell detected by the first UE through cell measurement.

Optionally, the relay UE is a relay UE discovered by the first UE when the first UE performs relay discovery.

Optionally, the cell satisfies a first condition; and the first condition includes: channel quality of a Uu interface of the cell is greater than a first threshold.

Optionally, the relay UE satisfies a second condition; and the second condition includes: an access stratum criterion and a non-access stratum criterion;
the access stratum criterion includes: channel quality of a Uu interface and/or PC5 interface of the relay UE is greater than a second threshold value; the non-access stratum criterion includes: a policy of whether the relay UE is allowed to serve as a relay.

Optionally, the apparatus further includes:
a second transmission unit configured to transmit first indication information to the first UE, where the first indication information is used to instruct the first UE to perform a first operation.

The first operation includes at least one of cell search, cell measurement, and relay UE discovery.

Optionally, the transmission signaling of the auxiliary information includes one of the following:
RRC signaling between the first UE and the communication device;
MAC CE over the Uu interface;
Physical layer signaling over the Uu interface;
MAC CE over sidelink interface;
Physical layer signaling over the sidelink interface.

Optionally, the first transmission unit 112 includes at least one of the following:
a first transmission subunit configured to transmit first transmission path configuration information to the first UE, where the first transmission path configuration information is used to indicate identification information of a relay UE that the first UE needs to access;
a second transmission subunit configured to transmit second transmission path configuration information to the relay UE, where the second transmission path configuration information is used to indicate identification information of a first UE that needs to establish a sidelink interface connection with the relay UE.

Optionally, the apparatus further includes: a configuration unit, configured to configure a transmission path identifier for all or part of the transmission paths of the first UE.

The transmission path identifier includes one of the following:
a first identifier; where the first identifier is a unique transmission path identifier configured by the communication device for each transmission path of the first UE;
a second identifier; where the second identifier is a combination of a cell identifier to which the transmission path belongs and an intra-cell transmission path identifier configured by the communication device for each transmission path of the first UE in units of cells;
a third identifier; where the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; where the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

Optionally, the apparatus further includes: a third receiving unit configured to receive UE capability information transmitted by the first UE, where the UE capability information is used to indicate that the first UE supports transmission using multiple transmission paths.

It is to be noted here that the above apparatus provided by the embodiment of the present disclosure can implement all the method steps implemented by the above embodiment of the method applied to communication device, and can achieve the same technical effect. The same parts and beneficial effects as those of the method embodiment will not be repeated here.

Specifically, as shown in FIG. 12, one embodiment of the present disclosure provides a transmission path configuration apparatus 120, which is applied to a first UE and includes:
a first receiving unit 121 configured to receive transmission path configuration information for the first UE transmitted by a communication device;
where the communication device is a network device accessed by the first UE or a target UE that communicates with the first UE.

Optionally, the transmission path configuration information is determined by the communication device according to implementation of the communication device and/or auxiliary information transmitted by the first UE.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE; where the channel quality may include: sidelink discovery reference signal received power (SD-RSRP) and/or sidelink reference signal received power (SL-RSRP);
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the cell is a cell discovered by the first UE when the first UE performs cell search;
and/or,
the cell is a cell detected by the first UE through cell measurement.

Optionally, the relay UE is a relay UE discovered by the first UE when the first UE performs relay discovery.

Optionally, the cell satisfies a first condition; and the first condition includes: channel quality of a Uu interface of the cell is greater than a first threshold.

Optionally, the relay UE satisfies a second condition; and the second condition includes: an access stratum criterion and a non-access stratum criterion;
the access stratum criterion includes: channel quality of a Uu interface and/or PC5 interface of the relay UE is greater than a second threshold value; the non-access stratum criterion includes: a policy of whether the relay UE is allowed to serve as a relay.

Optionally, the apparatus further includes:
a first processing unit configured to receive first indication information transmitted by the communication device; perform a first operation according to the first indication information;
   or,
a second processing unit configured to perform the first operation based on UE implementation of the first UE;
where the first operation includes at least one of cell search, cell measurement, and relay UE discovery.

Optionally, the apparatus further includes: a third transmission unit configured to transmit auxiliary information to the communication device.

Optionally, the transmission signaling of the auxiliary information includes one of the following:
RRC signaling between the first UE and the communication device;
MAC CE over the Uu interface;
Physical layer signaling over the Uu interface;
MAC CE over sidelink interface;
Physical layer signaling over the sidelink interface.

Optionally, the first receiving unit 121 is specifically configured to: receive first transmission path configuration information transmitted by the communication device, where the first transmission path configuration information is used to indicate identification information of a relay UE that the first UE needs to access.

Optionally, the transmission path configuration information includes: transmission path identifiers of all or part of the transmission paths of the first UE.

The transmission path identifier includes one of the following:
a first identifier; where the first identifier is a unique transmission path identifier configured by the communication device for each transmission path of the first UE;
a second identifier; where the second identifier is a combination of a cell identifier to which the transmission path belongs and an intra-cell transmission path identifier configured by the communication device for each transmission path of the first UE in units of cells;
a third identifier; where the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; where the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

Optionally, the apparatus further includes: a fourth transmission unit configured to transmit UE capability information to the communication device, where the UE capability information is used to indicate that the first UE supports transmission using multiple transmission paths.

It is to be noted here that the above apparatus provided by the embodiment of the present disclosure can implement all the method steps implemented by the above embodiment of the method applied to the first UE, and can achieve the same technical effect. The same parts and beneficial effects as those in the method embodiment will not be repeated here.

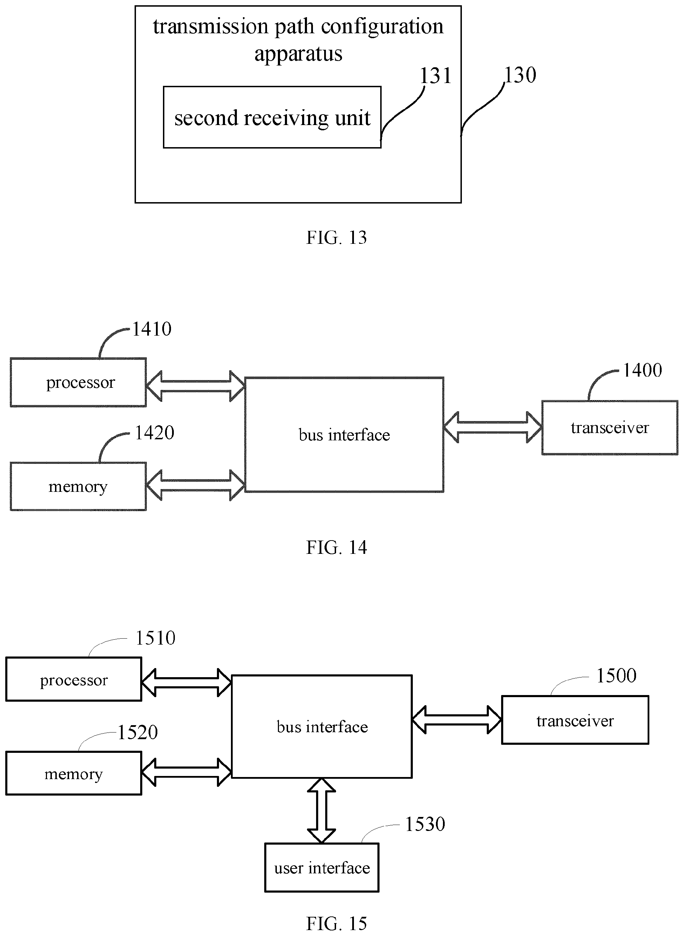

As shown in FIG. 13, one embodiment of the present disclosure provides a transmission path configuration apparatus 130, which is applied to a relay UE, including:
a second receiving unit 131 configured to receive transmission path configuration information for a first UE transmitted by the communication device;
where the communication device is a network device accessed by the first UE or a target UE that communicates with the first UE; and the relay UE is a relay UE used by the first UE for accessing the communication device.

Optionally, the transmission path configuration information is determined by the communication device according to implementation of the communication device and/or auxiliary information transmitted by the first UE.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE; where the channel quality may include: sidelink discovery reference signal received power (SD-RSRP) and/or sidelink reference signal received power (SL-RSRP);
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the cell is a cell discovered by the first UE when the first UE performs cell search;
and/or,
the cell is a cell detected by the first UE through cell measurement.

Optionally, the relay UE is a relay UE discovered by the first UE when the first UE performs relay discovery.

Optionally, the cell satisfies a first condition; and the first condition includes: channel quality of a Uu interface of the cell is greater than a first threshold.

Optionally, the relay UE satisfies a second condition; and the second condition includes: an access stratum criterion and a non-access stratum criterion;
the access stratum criterion includes: channel quality of a Uu interface and/or PC5 interface of the relay UE is greater than a second threshold value; the non-access stratum criterion includes: a policy of whether the relay UE is allowed to serve as a relay.

Optionally, the second receiving unit 131 is specifically configured to: receive second transmission path configuration information transmitted by the communication device, where the second transmission path configuration information is used to indicate identification information of a first UE that needs to establish a sidelink interface connection with the relay UE.

Optionally, the transmission path configuration information includes: transmission path identifiers of all or part of the transmission paths of the first UE.

The transmission path identifier includes one of the following:
a first identifier; where the first identifier is a unique transmission path identifier configured by the communication device for each transmission path of the first UE;
a second identifier; where the second identifier is a combination of a cell identifier to which the transmission path belongs and an intra-cell transmission path identifier configured by the communication device for each transmission path of the first UE in units of cells;
a third identifier; where the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; where the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

It is to be noted here that the above apparatus provided by the embodiment of the present disclosure can implement all the method steps implemented by the above embodiment of the method applied to the relay UE, and can achieve the same technical effect. The same parts and beneficial effects as those in the method embodiment will not be repeated here.

It is to be noted that the division of the units in the embodiment of the present disclosure is schematic, and is only a logical function division, and there may be another division manner in actual implementation. In addition, each functional unit in each embodiment of the present disclosure may be integrated into one processing unit, each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, the essence of the technical solution of the present disclosure or the part that contributes to the related technology or all or part of the technical solution can be embodied in the form of a software product, and the computer software product is stored in a storage medium. Several instructions are included to make a computer device (which may be a personal computer, a server, or a network device, etc.) or a processor (processor) execute all or part of the steps of the methods described in various embodiments of the present disclosure. The above storage medium includes: U disk, mobile hard disk, read-only memory (Read-Only Memory, ROM), random access memory (Random Access Memory, RAM), magnetic disk or optical disk and other various media that can store program codes.

As shown in FIG. 14, one embodiment of the present disclosure further provides a communication device, which includes a memory 1420, a transceiver 1400, and a processor 1410.

The memory 1420 is used to store computer programs; the processor 1410 is used to read the computer programs in the memory; the transceiver 1400 is used to send and receive data under the control of the processor and perform the following operations:
transmitting transmission path configuration information for the first UE to the first UE and/or the relay UE;
where the communication device is a network device accessed by the first UE or a target UE that communicates with the first UE, and the relay UE is a relay UE used by the first UE for accessing the communication device.

Optionally, the processor is configured to read a computer program in the memory and perform the following operations:
determining transmission path configuration information for the first UE according to implementation of the communication device;
   and/or
determining transmission path configuration information for the first UE according to auxiliary information received from the first UE.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE; where the channel quality may include: sidelink discovery reference signal received power (SD-RSRP) and/or sidelink reference signal received power (SL-RSRP);
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the cell is a cell discovered by the first UE when the first UE performs cell search;
and/or,
the cell is a cell detected by the first UE through cell measurement.

Optionally, the relay UE is a relay UE discovered by the first UE when the first UE performs relay discovery.

Optionally, the cell satisfies a first condition; and the first condition includes: channel quality of a Uu interface of the cell is greater than a first threshold.

Optionally, the relay UE satisfies a second condition; and the second condition includes: an access stratum criterion and a non-access stratum criterion;
the access stratum criterion includes: channel quality of a Uu interface and/or PC5 interface of the relay UE is greater than a second threshold value; the non-access stratum criterion includes: a policy of whether the relay UE is allowed to serve as a relay.

Optionally, the transceiver is configured to: transmit first indication information to the first UE, where the first indication information is used to instruct the first UE to perform a first operation;

The first operation includes at least one of cell search, cell measurement, and relay UE discovery.

Optionally, the transmission signaling of the auxiliary information includes one of the following:
RRC signaling between the first UE and the communication device;
MAC CE over the Uu interface;
Physical layer signaling over the Uu interface;
MAC CE over sidelink interface;
Physical layer signaling over the sidelink interface.

Optionally, the transceiver is configured to perform at least one of the following operations:
transmitting first transmission path configuration information to the first UE, where the first transmission path configuration information is used to indicate identification information of a relay UE that the first UE needs to access;
transmitting second transmission path configuration information to the relay UE, where the second transmission path configuration information is used to indicate identification information of a first UE that needs to establish a direct communication interface connection with the relay UE.

Optionally, the processor is configured to read a computer program in the memory and perform the following operations:
configuring transmission path identifiers for all or part of the transmission paths of the first UE.

The transmission path identifier includes one of the following:
a first identifier; where the first identifier is a unique transmission path identifier configured by the communication device for each transmission path of the first UE;
a second identifier; where the second identifier is a combination of a cell identifier to which the transmission path belongs and an intra-cell transmission path identifier configured by the communication device for each transmission path of the first UE in units of cells;
a third identifier; where the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; where the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

Optionally, the transceiver is configured to receive UE capability information transmitted by the first UE, where the UE capability information is used to indicate that the first UE supports transmission using multiple transmission paths.

In FIG. 14, the bus architecture may include any number of interconnected buses and bridges, specifically one or more processors represented by the processor 1410 and various circuits of the memory represented by the memory 1420 are linked together. The bus architecture can also link together various other circuits such as peripherals, voltage regulators, and power management circuits, etc., which are well known in the art and therefore will not be further described herein. The bus interface provides the interface. Transceiver 1400 may be a plurality of elements, including a transmitter and a transceiver, providing a means for communicating with various other devices over a transmission medium. The processor 1410 is responsible for managing the bus architecture and general processing, and the memory 1420 can store data used by the processor 1410 when performing operations.

The processor 1410 may be a central processing unit (Central Processing Unit, CPU), an application specific integrated circuit (Application Specific Integrated Circuit, ASIC), a field programmable gate array (Field-Programmable Gate Array, FPGA) or a complex programmable logic device (Complex Programmable Logic Device, CPLD), the processor can also adopt a multi-core architecture.

It is to be noted here that the above communication device provided by the embodiment of the present disclosure can implement all the method steps implemented by the above embodiment of the method applied to the communication device, and can achieve the same technical effect. The same parts and beneficial effects as those in the method embodiment will not be repeated here.

As shown in FIG. 15, one embodiment of the present disclosure further provides a UE. The UE is a first UE and includes: a memory 1520, a transceiver 1500, and a processor 1510.

The memory 1520 is used to store computer programs; the processor 1510 is used to read the computer programs in the memory; the transceiver 1500 is used to send and receive data under the control of the processor and perform the following operations:
receiving transmission path configuration information for the first UE transmitted by the communication device;
where the communication device is a network device accessed by the first UE or a target UE that communicates with the first UE.

Optionally, the transmission path configuration information is determined by the communication device according to implementation of the communication device and/or auxiliary information transmitted by the first UE.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE; where the channel quality may include: sidelink discovery reference signal received power (SD-RSRP) and/or sidelink reference signal received power (SL-RSRP);
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the cell is a cell discovered by the first UE when the first UE performs cell search;
or,
the cell is a cell detected by the first UE through cell measurement.

The relay UE is a relay UE discovered by the first UE when the first UE performs relay discovery.

Optionally, the cell satisfies a first condition; where the first condition includes: channel quality of a Uu interface of the cell is greater than a first threshold.

The relay UE satisfies a second condition; where the second condition includes: an access stratum criterion and a non-access stratum criterion.

The access stratum criterion includes: channel quality of a Uu interface and/or PC5 interface of the relay UE is greater than a second threshold value. The non-access stratum criterion includes: a policy of whether the relay UE is allowed to serve as a relay.

Optionally, the processor 1510 is configured to read the computer program in the memory and perform the following operations:
receiving first indication information transmitted by the communication device; performing a first operation according to the first indication information;
   or,
performing a first operation based on UE implementation of the first UE;
where the first operation includes at least one of cell search, cell measurement, and relay UE discovery.

Optionally, the transceiver 1500 is configured to transmit auxiliary information to the communication device.

Optionally, transmission signaling of the auxiliary information includes one of the following:
RRC signaling between the first UE and the communication device;
MAC CE over the Uu interface;
Physical layer signaling over the Uu interface;
MAC CE over sidelink interface;
Physical layer signaling over the sidelink interface.

Optionally, the transceiver is configured to: receive first transmission path configuration information transmitted by the communication device, where the first transmission path configuration information is used to indicate identification information of a relay UE that the first UE needs to access;

Optionally, the transmission path configuration information includes:
a transmission path identifier of all or part of the transmission path of the first UE.

The transmission path identifier includes one of the following:
a first identifier; where the first identifier is a unique transmission path identifier configured by the communication device for each transmission path of the first UE;
a second identifier; where the second identifier is a combination of a cell identifier to which the transmission path belongs and an intra-cell transmission path identifier configured by the communication device for each transmission path of the first UE in units of cells;
a third identifier; where the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; where the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

Optionally, the transceiver is configured to transmit UE capability information to the communication device, where the UE capability information is used to indicate that the first UE supports transmission using multiple transmission paths.

It is to be noted that, in FIG. 15, the bus architecture may include any number of interconnected buses and bridges, specifically one or more processors represented by the processor 1510 and various circuits of the memory represented by the memory 1520 are linked together. The bus architecture can also link together various other circuits such as peripherals, voltage regulators, and power management circuits, etc., which are well known in the art and therefore will not be further described herein. The bus interface provides the interface. The transceiver 1500 may be a plurality of elements, including a transmitter and a transceiver, providing a means for communicating with various other devices over a transmission medium. For different UEs, the user interface 1530 may also be an interface capable of connecting externally and internally to required devices, and the connected devices include but are not limited to keypads, displays, speakers, microphones, joysticks, and the like. The processor 1510 is responsible for managing the bus architecture and general processing, and the memory 1520 can store data used by the processor 1510 when performing operations.

Optionally, the processor 1510 may be a central processing unit (Central Processing Unit, CPU), an application specific integrated circuit (Application Specific Integrated Circuit, ASIC), a field programmable gate array (Field-Programmable Gate Array, FPGA) or a complex programmable A logic device (Complex Programmable Logic Device, CPLD), and a processor may also adopt a multi-core architecture.

The processor is used to execute any one of the methods provided by the embodiments of the present disclosure according to the obtained executable instructions by calling the computer program stored in the memory. The processor and memory may also be physically separated.

It is to be noted here that the above UE provided by the embodiment of the present disclosure can implement all the method steps implemented by the above embodiment of the method applied to the first UE, and can achieve the same technical effect. The same parts and beneficial effects as those in the method embodiment will not be repeated here.

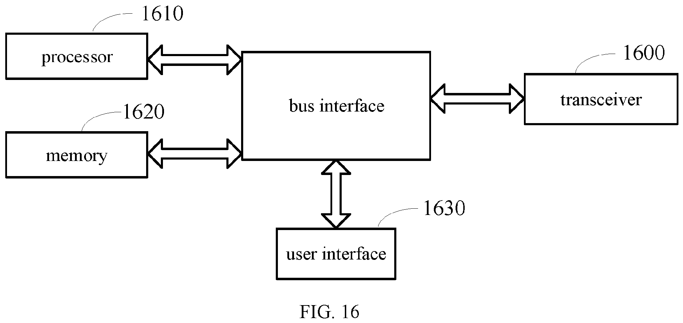

As shown in FIG. 16, one embodiment of the present disclosure further provides a UE. The UE is a relay UE, and includes: a memory 1620, a transceiver 1600, and a processor 1610.

The memory 1620 is used to store computer programs; the processor 1610 is used to read the computer programs in the memory; the transceiver 1600 is used to send and receive data under the control of the processor and perform the following operations:
receiving transmission path configuration information for the first UE transmitted by the communication device;
where the communication device is a network device accessed by the first UE or a target UE that communicates with the first UE; and the relay UE is a relay UE used by the first UE for accessing the communication device.

Optionally, the transmission path configuration information is determined by the communication device according to implementation of the communication device and/or auxiliary information transmitted by the first UE.

Optionally, the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE; where the channel quality may include: sidelink discovery reference signal received power (SD-RSRP) and/or sidelink reference signal received power (SL-RSRP);
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

Optionally, the cell is a cell discovered by the first UE when the first UE performs cell search;
and/or,
the cell is a cell detected by the first UE through cell measurement.

Optionally, the relay UE is a relay UE discovered by the first UE when the first UE performs relay discovery.

Optionally, the cell satisfies a first condition; and the first condition includes: channel quality of a Uu interface of the cell is greater than a first threshold.

Optionally, the relay UE satisfies a second condition; and the second condition includes: an access stratum criterion and a non-access stratum criterion;
the access stratum criterion includes: channel quality of a Uu interface and/or PC5 interface of the relay UE is greater than a second threshold value; the non-access stratum criterion includes: a policy of whether the relay UE is allowed to serve as a relay.

Optionally, the transceiver 1600 is configured to receive second transmission path configuration information transmitted by the communication device, where the second transmission path configuration information is used to indicate identification information of a first UE that needs to establish a sidelink interface connection with the relay UE.

Optionally, the transmission path configuration information includes transmission path identifiers of all or part of the transmission paths of the first UE.

The transmission path identifier includes one of the following:
a first identifier; where the first identifier is a unique transmission path identifier configured by the communication device for each transmission path of the first UE;
a second identifier; where the second identifier is a combination of a cell identifier to which the transmission path belongs and an intra-cell transmission path identifier configured by the communication device for each transmission path of the first UE in units of cells;
a third identifier; where the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; where the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

It is to be noted that, in FIG. 16, a bus architecture may include any number of interconnected bus and bridge. Specifically, various circuits of one or more processors, which are represented by the processor 1610, and one or more memories, which are represented by the memory 1620, are linked together. The bus architecture may link various other circuits, such as a peripheral device, voltage regulator and a power management circuit together. These features are well known in this field; therefore, this disclosure does not make further description on these features. The bus interface provides an interface. The transceiver 1600 may be multiple elements, including a transmitter and a receiver and provide units, which communicate with other devices on the transmission medium. For different UEs, the user interface 1630 may also be an interface capable of connecting externally and internally to required devices, and the connected devices include but are not limited to keypads, displays, speakers, microphones, joysticks, and the like. The processor 1610 is responsible for managing the bus architecture and the normal processing. The memory 1620 may be used to store data used by the processor 1410 for performing operations.

The processor 1610 may be a central processing unit (CPU), an application specific integrated circuit (ASIC), a field-programmable gate array (FPGA) or a complex programmable logic device (CPLD). The processor may also adopt multi-core architecture.

The processor is used to execute any one of the methods provided by the embodiments of the present disclosure according to the obtained executable instructions by calling the computer program stored in the memory. The processor and memory may also be physically separated.

It is to be noted here that the above UE provided by the embodiment of the present disclosure can implement all the method steps implemented by the above method embodiment applied to the relay UE, and can achieve the same technical effect. The parts and beneficial effects in this embodiment that are the same as those in the method embodiment will not be repeated here.

One embodiment of the present disclosure further provides a processor-readable storage medium, which includes a computer program stored thereon. When the program is executed by a processor, the steps of the transmission path configuration method are implemented, with the same technical effect achieved, which will not be repeated here to avoid repetition. The readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It is to be noted that division of units in the embodiment of the present disclosure is only a logical function division; in actual implementation, all or part of the units may be integrated into one physical entity, or may also be physically separated. All of these units may be implemented in the form of using processing components to call software, or may be implemented by hardware, or some units are implemented in the form of using processing components to call software and some units are implemented by hardware. For example, the determination unit may be a separate processing element, or may be integrated into a chip of the above device; in addition, the determination unit may also be stored in the form of program codes in the memory of the above device, and is called by a certain processing element of the above device to execute the function of the above determination unit. The implementation of other units is similar. In addition, all or part of these units may be integrated together or implemented independently. The processing element described here may be an integrated circuit with signal processing capabilities. In the implementation process, each step of the above method or each of the above units may be completed by instructions of hardware integrated logic circuits or software in the processor element.

For example, each module, unit, sub-unit or sub-module may be one or more integrated circuits configured to implement the above method, such as one or more application specific integrated circuits (ASICs), or one or multiple digital signal processors (DSP), or one or more field programmable gate arrays (FPGA). For another example, when one of the above units is implemented in the form of using a processing element to call program codes, the processing element may be a general-purpose processor, such as a central processing unit (CPU) or other processors that can call the program codes. For another example, these units may be integrated together and implemented in the form of a system-on-a-chip (SOC).

The terms "first", "second" and the like in the description and claims of the present disclosure are used to distinguish similar objects and are not necessarily used to describe a specific order or sequence. It is to be understood that data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the description and claims is used to indicate at least one of connected objects, for example, A and/or B and/or C, means that there are seven situations: there is A alone, there is B alone, there is C alone, there are both A and B, there are both B and C, there are both A and C, and there are A, B and C. Similarly, "at least one of A and B" in the specification and claims means that there is A alone, there is B alone, or there are both A and B.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A transmission path configuration method, comprising:
transmitting, by a communication device, transmission path configuration information for a first user equipment (UE), to the first UE and/or a relay UE;
wherein the communication device is a network device accessed by the first UE or a target UE that communicates with the first UE; and the relay UE is a relay UE used by the first UE for accessing the communication device.

2. The method according to claim 1, wherein the method further comprises:
determining, by the communication device, the transmission path configuration information for the first UE, according to implementation of the communication device;
and/or,
determining, by the communication device, the transmission path configuration information for the first UE, according to auxiliary information received from the first UE.

3. The method according to claim 2, wherein the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

4. The method according to claim 3, wherein the cell is a cell discovered by the first UE when the first UE performs cell search;
and/or,
the cell is a cell detected by the first UE through cell measurement.

5. The method according to claim 3, wherein the relay UE is a relay UE discovered by the first UE when the first UE performs relay discovery.

6. The method according to claim 4, wherein the cell satisfies a first condition; and the first condition includes: channel quality of a Uu interface of the cell is greater than a first threshold.

7. The method according to claim 5, wherein the relay UE satisfies a second condition; and the second condition includes: an access stratum criterion and a non-access stratum criterion;
the access stratum criterion includes: channel quality of a Uu interface and/or PC5 interface of the relay UE is greater than a second threshold value; the non-access stratum criterion includes: a policy of whether the relay UE is allowed to serve as a relay.

8. The method according to claim 1, wherein the method further comprises:
transmitting first indication information to the first UE; wherein the first indication information is used to instruct the first UE to perform a first operation;
wherein the first operation includes at least one of cell search, cell measurement and relay UE discovery.

9. The method according to claim 2, wherein transmission signaling of the auxiliary information includes one of the following:
RRC signaling between the first UE and the communication device;
MAC CE over the Uu interface;
Physical layer signaling over the Uu interface;
MAC CE over sidelink interface;
Physical layer signaling over the sidelink interface.

10. The method according to claim 1, wherein the transmitting, by the communication device, transmission path configuration information for the first UE to the first UE and/or the relay UE, includes at least one of the following:
transmitting first transmission path configuration information to the first UE, wherein the first transmission path configuration information is used to indicate identification information of a relay UE that the first UE needs to access;
transmitting second transmission path configuration information to the relay UE, wherein the second transmission path configuration information is used to indicate identification information of a first UE that needs to establish a sidelink interface connection with the relay UE.

11. The method according to claim 1, wherein the method further comprises: configuring a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

12. The method according to claim 1, wherein the method further comprises:
receiving UE capability information transmitted by the first UE, wherein the UE capability information is used to indicate that the first UE supports transmission using multiple transmission paths.

13. A transmission path configuration method, comprising:
receiving, by a first UE, transmission path configuration information for the first UE transmitted by a communication device;
wherein the communication device is a network device accessed by the first UE or a target UE that communicates with the first UE.

14. The method according to claim 13, wherein the transmission path configuration information is determined by the communication device according to implementation of the communication device and/or auxiliary information transmitted by the first UE.

15. The method according to claim 14, wherein the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

16. The method according to claim 15, wherein the cell is a cell discovered by the first UE when the first UE performs cell search;
and/or,
the cell is a cell detected by the first UE through cell measurement.

17. The method according to claim 15, wherein the relay UE is a relay UE discovered by the first UE when the first UE performs relay discovery.

18. The method according to claim 16, wherein the cell satisfies a first condition; and the first condition includes: channel quality of a Uu interface of the cell is greater than a first threshold.

19. The method according to claim 17, wherein the relay UE satisfies a second condition; and the second condition includes: an access stratum criterion and a non-access stratum criterion;
the access stratum criterion includes: channel quality of a Uu interface and/or PC5 interface of the relay UE is greater than a second threshold value; the non-access stratum criterion includes: a policy of whether the relay UE is allowed to serve as a relay.

20. The method according to claim 13, wherein the method further comprises:
receiving first indication information transmitted by the communication device; performing a first operation according to the first indication information;
or,
performing the first operation based on UE implementation of the first UE;
wherein the first operation includes at least one of cell search, cell measurement, and relay UE discovery.

21. The method according to claim 14, wherein the method further comprises:
transmitting the auxiliary information to the communication device.

22. The method according to claim 21, wherein transmission signaling of the auxiliary information includes one of the following:
RRC signaling between the first UE and the communication device;
MAC CE over the Uu interface;
Physical layer signaling over the Uu interface;
MAC CE over sidelink interface;
Physical layer signaling over the sidelink interface.

23. The method according to claim 13, wherein the receiving, by a first UE, transmission path configuration information for the first UE transmitted by a communication device, includes:
receiving first transmission path configuration information transmitted by the communication device, wherein the first transmission path configuration information is used to indicate identification information of a relay UE that the first UE needs to access.

24. The method according to claim 13, wherein the transmission path configuration information includes a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

25. The method according to claim 13, wherein the method further comprises:
transmitting UE capability information to the communication device, wherein the UE capability information is used to indicate that the first UE supports transmission using multiple transmission paths.

26. A transmission path configuration method, comprising:
receiving, by a relay UE, transmission path configuration information for a first UE transmitted by a communication device;
wherein the communication device is a network device accessed by the first UE or a target UE that communicates with the first UE; and the relay UE is a relay UE used by the first UE for accessing the communication device.

27. The method according to claim 26, wherein the transmission path configuration information is determined by the communication device according to implementation of the communication device and/or auxiliary information transmitted by the first UE.

28. The method according to claim 27, wherein the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

29. The method according to claim 28, wherein the cell is a cell discovered by the first UE when the first UE performs cell search;
and/or,
the cell is a cell detected by the first UE through cell measurement.

30. The method according to claim 28, wherein the relay UE is a relay UE discovered by the first UE when the first UE performs relay discovery.

31. The method according to claim 29, wherein the cell satisfies a first condition; and the first condition includes: channel quality of a Uu interface of the cell is greater than a first threshold.

32. The method according to claim 30, wherein the relay UE satisfies a second condition; and the second condition includes: an access stratum criterion and a non-access stratum criterion;
the access stratum criterion includes: channel quality of a Uu interface and/or PC5 interface of the relay UE is greater than a second threshold value; the non-access stratum criterion includes: a policy of whether the relay UE is allowed to serve as a relay.

33. The method according to claim 26, wherein the receiving the transmission path configuration information for the first UE transmitted by the communication device, includes:
receiving second transmission path configuration information transmitted by the communication device, wherein the second transmission path configuration information is used to indicate identification information of a first UE that needs to establish a sidelink interface connection with the relay UE.

34. The method according to claim 26, wherein the transmission path configuration information includes a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

35. A communication device, comprising: a memory, a transceiver, and a processor;
wherein the memory is used to store a computer program; the processor is used to read the computer program in the memory; the transceiver is used to transmit and receive data under control of the processor and perform the following:
transmitting transmission path configuration information for a first user equipment (UE), to the first UE and/or a relay UE;
wherein the communication device is a network device accessed by the first UE or a target UE that communicates with the first UE; and the relay UE is a relay UE used by the first UE for accessing the communication device.

36. The communication device according to claim 35, wherein the processor is configured to read the computer program in the memory and perform the following:
determining the transmission path configuration information for the first UE, according to implementation of the communication device;
and/or,
determining the transmission path configuration information for the first UE, according to auxiliary information received from the first UE.

37. The communication device according to claim 36, wherein the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

38. The communication device according to claim 35, wherein the transceiver is configured to perform at least one of the following:
transmitting first transmission path configuration information to the first UE, wherein the first transmission path configuration information is used to indicate identification information of a relay UE that the first UE needs to access;
transmitting second transmission path configuration information to the relay UE, wherein the second transmission path configuration information is used to indicate identification information of a first UE that needs to establish a sidelink interface connection with the relay UE.

39. The communication device according to claim 35, wherein the processor is configured to read the computer program in the memory and perform the following:
configuring a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

40. A user equipment (UE) serving as a first UE, comprising: a memory, a transceiver and a processor;
wherein the memory is used to store a computer program; the processor is used to read the computer program in the memory; the transceiver is used to transmit and receive data under control of the processor and perform the following:
receiving transmission path configuration information for the first UE transmitted by a communication device;
wherein the communication device is a network device accessed by the first UE or a target UE that communicates with the first UE.

41. The UE according to claim 40, wherein the transmission path configuration information is determined by the communication device according to implementation of the communication device and/or auxiliary information transmitted by the first UE.

42. The UE according to claim 41 wherein the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

43. The UE according to claim 40, wherein the transceiver is used to receive first transmission path configuration information transmitted by the communication device, wherein the first transmission path configuration information is used to indicate identification information of a relay UE that the first UE needs to access.

44. The UE according to claim 40, wherein the transmission path configuration information includes a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

45. A user equipment (UE) serving as a relay UE, comprising: a memory, a transceiver and a processor;
wherein the memory is used to store a computer program; the processor is used to read the computer program in the memory; the transceiver is used to transmit and receive data under control of the processor and perform the following:
receiving transmission path configuration information for a first UE transmitted by a communication device;
wherein the communication device is a network device accessed by the first UE or a target UE that communicates with the first UE; and the relay UE is a relay UE used by the first UE for accessing the communication device.

46. The UE according to claim 45, wherein the transmission path configuration information is determined by the communication device according to implementation of the communication device and/or auxiliary information transmitted by the first UE.

47. The UE according to claim 46, wherein the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

48. The UE according to claim 45, wherein the transceiver is used to receive second transmission path configuration information transmitted by the communication device, wherein the second transmission path configuration information is used to indicate identification information of a first UE that needs to establish a sidelink interface connection with the relay UE.

49. The UE according to claim 45, wherein the transmission path configuration information includes a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

50. A transmission path configuration apparatus, applied to a communication device, comprising:
a first transmission unit configured to transmit transmission path configuration information for a first user equipment (UE), to the first UE and/or a relay UE;
wherein the communication device is a network device accessed by the first UE or a target UE that communicates with the first UE; and the relay UE is a relay UE used by the first UE for accessing the communication device.

51. The apparatus according to claim 50, wherein the apparatus further comprises: a first determining unit configured to determine the transmission path configuration information for the first UE, according to implementation of the communication device;
and/or,
determine the transmission path configuration information for the first UE, according to auxiliary information received from the first UE.

52. The apparatus according to claim 51, wherein the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

53. The apparatus according to claim 50, wherein the first transmission unit comprises at least one of the following:
a first transmission subunit configured to transmit first transmission path configuration information to the first UE, wherein the first transmission path configuration information is used to indicate identification information of a relay UE that the first UE needs to access;
a second transmission subunit configured to transmit second transmission path configuration information to the relay UE, wherein the second transmission path configuration information is used to indicate identification information of a first UE that needs to establish a sidelink interface connection with the relay UE.

54. The apparatus according to claim 50, wherein the apparatus further comprises: a configuration unit configured to configure a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

55. A transmission path configuration apparatus, applied to a first UE, comprising:
a first receiving unit is configured to receive transmission path configuration information for the first UE transmitted by a communication device;
wherein the communication device is a network device accessed by the first UE or a target UE that communicates with the first UE.

56. The apparatus according to claim 55, wherein the transmission path configuration information is determined by the communication device according to implementation of the communication device and/or auxiliary information transmitted by the first UE.

57. The apparatus according to claim 56, wherein the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

58. The apparatus according to claim 55, wherein the first receiving unit is specifically configured to receive first transmission path configuration information transmitted by the communication device, wherein the first transmission path configuration information is used to indicate identification information of a relay UE that the first UE needs to access.

59. The apparatus according to claim 55, wherein the transmission path configuration information includes a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

60. A transmission path configuration apparatus, applied to a relay UE, comprising:
a second receiving unit configured to receive transmission path configuration information for a first UE transmitted by a communication device;
wherein the communication device is a network device accessed by the first UE or a target UE that communicates with the first UE; and the relay UE is a relay UE used by the first UE for accessing the communication device.

61. The apparatus according to claim 60, wherein the transmission path configuration information is determined by the communication device according to implementation of the communication device and/or auxiliary information transmitted by the first UE.

62. The apparatus according to claim 61, wherein the auxiliary information includes at least one of the following:
cell identity information of available cells of Uu interface detected by the first UE;
channel quality of available cells of Uu interface detected by the first UE;
identity information of a relay UE;
PLMN list corresponding to a relay UE;
cell identity information of current serving cells of Uu interface of a relay UE;
channel quality of sidelink interface between a relay UE and a first UE;
channel quality of an interface between a relay UE and the communication device;
carrier identity information between a relay UE and the communication device;
BWP identity information between a relay UE and the communication device;
carrier identity information of a sidelink interface between a relay UE and the first UE;
BWP identity information of a sidelink interface between a relay UE and the communication device.

63. The apparatus according to claim 60, wherein the second receiving unit is specifically configured to receive second transmission path configuration information transmitted by the communication device, wherein the second transmission path configuration information is used to indicate identification information of a first UE that needs to establish a sidelink interface connection with the relay UE.

64. The apparatus according to claim 60, wherein the transmission path configuration information includes a transmission path identifier for all or part of transmission paths of the first UE;
wherein the transmission path identifier includes one of the following:
a first identifier; wherein the first identifier is a unique transmission path identifier configured by the communication device for each transmission path of the first UE;
a second identifier; wherein the second identifier is a combination of a cell identifier to which the transmission path belongs and an intra-cell transmission path identifier configured by the communication device for each transmission path of the first UE in units of cells;
a third identifier; wherein the third identifier includes: a path identifier of a direct path and a path identifier of an indirect path, the path identifier of the direct path is a cell identifier of a cell to which the direct path belongs, and the path identifier of the indirect path is a unique transmission path identifier configured by the communication device for each indirect path of the first UE;
a fourth identifier; wherein the fourth identifier includes: a path identifier of a direct path and a path identifier of an indirect path; where the path identifier of the direct path is a cell identifier of a cell to which the direct path belongs; the path identifier of the indirect path is a combination of a cell identifier to which the indirect path belongs and an intra-cell transmission path identifier configured by the communication device for each transmission path of the first UE in units of cells.

65. A processor-readable storage medium, comprising a computer program stored thereon; wherein the computer program, when executed by a processor, causes the processor to perform steps of the transmission path configuration method according to any one of claims 1 to 12, or perform steps of the transmission path configuration method according to any one of claims 13 to 25, or perform steps of the transmission path configuration method according to any one of claims 26 to 34.
